# NEUE EUROPÄISCHE PATENTSCHRIFT

(11) **EP 1 536 944 B2**
(45) Veröffentlichungstag und Bekanntmachung des Hinweises auf die Entscheidung über den Einspruch: **05.10.2011**
(45) Hinweis auf die Patenterteilung: 21.06.2006
(21) Anmeldenummer: 03794885.8
(22) Anmeldetag: 16.08.2003
(51) Int. Cl.: B32B 3/18, B32B 37/00

(54) **GESCHAEUMTE KUNSTSTOFFPLATTE**
FOAMED PLASTIC SHEET
FEUILLE DE PLASTIQUE EXPANSEE

(30) Priorität: 29.08.2002 EP 02405739
(43) Veröffentlichungstag der Anmeldung: 08.06.2005
(73) Patentinhaber: 3A Technology & Management AG, 8212 Neuhausen am Rheinfall (CH)
(72) Erfinder: RAKUTT, Dietmar, CH-6330 Cham (CH); BERGER, Lukas, 6005 Luzern (CH)
(74) Vertreter: Gernet, Samuel Andreas
(86) Internationale Anmeldenummer: PCT/EP2003/009090
(87) Internationale Veröffentlichungsnummer: WO 2004/024434

(56) Entgegenhaltungen:
- US-A- 4 536 427
- US-A- 4 755 408
- US-A- 4 837 060
- US-A- 5 798 160

## Beschreibung

Vorliegende Erfindung betrifft ein flächenförmiges Strukturelement, welches geeignet ist für Kernschichten von Sandwich-Verbundelementen, enthaltend eine Mehrzahl von in einer Ebene nebeneinander angeordneten und miteinander verbundenen Körpersegmenten aus einem geschäumten Kunststoff, sowie ein Verfahren zur Herstellung eines solchen flächenförmigen Strukturelementes und die Verwendung desselben.

Es ist bekannt, Platten aus einem geschäumten thermoplastischen Kunststoff als Kernschichten in Sandwich-Verbunden einzusetzen. Die Herstellung von geschäumten Kunststoffplatten kann beispielsweise mittels eines Extrusionsverfahrens erfolgen. Die strukturelle Belastbarkeit, insbesondere die Druckfestigkeit, solcher, mittels Extrusionsverfahren hergestellter Kernschichten ist jedoch begrenzt. Sandwich-Verbunde mit den genannten Kernschichten sind daher als Strukturbauteile für anspruchsvolle Anwendungen oftmals nicht geeignet.

Für anspruchsvolle Anwendungen, wie z.B. Strukturbauteile im Transportwesen, sind jedoch Sandwich-Verbunde erforderlich, welche über ein hohes Mass an Festigkeit, insbesondere an Druckfestigkeit und Steifigkeit verfügen, und deren Kernmaterialien hohe Schubfestigkeit und -Steifigkeit aufweisen. Um diese Eigenschaften zu erreichen, werden beispielsweise stärkere und vielfach dickere Deckschichten verwendet. Dies führt in der Regel zu einer unerwünschten Erhöhung des spezifischen Gewichts der Sandwich-Verbunde. Zudem kann die Druckfestigkeit solcher Sandwich-Verbunde durch den Einsatz dickerer Deckschichten nicht beliebig erhöht werden.

Es ist daher wünschenswert, dass nicht nur die Deckschichten sondern auch die Kernschichten eine erhöhte Druck- und Schubfestigkeit und -Steifigkeit aufweisen, ohne jedoch den Vorteil der geringen Dichte von Schaumstoffkörpern aufgeben zu müssen.

Diese Massnahme würde einerseits die Herstellung von Sandwich-Verbunden mit verbesserten Festigkeits- und Steifigkeitseigenschaften ohne nennenswerte Erhöhung des spezifischen Gewichts erlauben. Andererseits würde der Einsatz von Kernschichten mit erhöhter Steifigkeit und Festigkeit auch der Einsatz von dünneren Deckschichten erlauben.

So sind Sandwich-Verbundplatten bekannt, welche durch spezifische Ausgestaltung der Kernschicht eine verbesserte Festigkeit aufweisen.

Die DE 197 15 529 C1 beschreibt beispielsweise die Herstellung eines Sandwich-Verbundes mit einer Kernschicht und beidseitig davon angeordneten Deckschichten, wobei die Kernschicht aus horizontal nebeneinander angeordneten polygonalen, z.B. würfelförmigen Schaumstoffsegmenten zusammengesetzt wird. Hierzu werden einzelne Schaumstoffsegmente mit einer Faserschicht überzogen und in einer Vorrichtung derart zusammengesetzt, dass sich die Segmentseitenflächen mit der Faserschicht stegartig berühren. Die stegartig ausgebildeten Faserschichten werden mit einem imprägniermittel durchtränkt. Durch Aushärtung des Imprägnier mittels entstehen zwischen den Schaumstoffsegmenten stegartige Faserverbundschichten, welche sich versteifend und verfestigend auf die Kernschicht auswirken.

Das genannte Herstellungsverfahren erweist sich jedoch als sehr aufwendig und teuer. Ferner ist eine nach dem beschriebenen Herstellungsverfahren produzierte Kernschicht nicht sortenrein, da mit den Schaumstoffsegmenten, Faserschichten und dem Imprägniermittel wenigstens drei unterschiedliche Materialien zum Einsatz kommen.

Die US 4,837,060 beschreibt ein Verbundelement mit einer Kernschicht aus gegenseitig verklebten oder gesiegelten, zylinderförmigen Schaumstoffelementen, sowie beidseitig von der Kernschicht angeordneten Deckschichten. Die Zylinderachsen der Schaumstoffelemente verlaufen parallel zur Flächenebene der Deckschichten.

Die US 4,536,427 beschreibt ein Verbundelement mit einer Kernschicht aus miteinander verklebten Balsaholzelementen. Die Klebverbindung ist flexibel und elastisch ausgestaltet, so dass die Kernschicht biegsam ist.

Die US 6,213,540 B1 beschreibt einen Energieabsorptionsartikel, der sich auszeichnet durch Energieabsorptionseigenschaften und durch Dimensionsrückstelleigenschaften sowie eine Schlagfestigkeit.

Aufgabe vorliegender Erfindung ist es, ein flächenförmigen, insbesondere plattenartiges Strukturelement, geeignet für Kernschlchten von Sandwich-Verbundelementen vorzuschlagen, wobei das Strukturelement einen Schaumstoff mit einer geschlossenzelligen Struktur enthalten soll. Ferner umfasst die Aufgabenstellung, ein kostengünstiges Verfahren zur Herstellung des genannten flächenförmigen Strukturelementes. Das flächenförmige Strukturelement soll im Vergleich zu herkömmlichen Schaumstoffplatten insbesondere eine verbesserte DruckPestigkeit aufweisen, Das flächenförmige Strukturelement soll ferner möglichst sortenrein sein.

Erfindungsgemäss wird die Aufgabe dadurch gelöst, dass das Strukturelement vollständig aus Kunststoff ist und die Körpersegmente an ihren anstossenden Seitenflächen unter Ausbildung flächiger Schweissnähle gegenseitig verschweisst sind,
wobei die flächigen Schweissnähte eine porenarme oder porenfreie Kunststoffzwischenschicht in Form einer in Draufsicht netzartigen, versteifend wirkenden Stegstruktur ausbilden.

Das flächenförmige Strukturelement ist vorzugsweise plattenförmig ausgebildet. Das flächenförmige Strukturelement liegt vorzugsweise als Plattenelement, insbesondere als quaderförmiges Plattenelement, vor.

Das erfindungsgemässe flächenförmige Strukturelement besteht aus einem Polyethylenterephthalat (PET) oder einem Styrol/Acrylnitril-Copolymer (SAN).

Das erfindungsgemässe Strukturelement ist vorzugsweise sortenrein, d.h. es besteht vorzugsweise aus einem einzigen Kunststoff. Die Sortenreinheit bedingt insbesondere, dass das Strukturelement keine andersartigen Klebstoffe zum Verbinden der Körpersegmente enthält.

Das spezifische Gewicht eines erfindungsgemässen Strukturelementes beträgt beispielsweise mehr als 20 kg/m³, vorzugsweise mehr als 40 kg/m³ und insbesondere mehr als 50 kg/m³ und beispielsweise weniger als 200 kg/m³ und vorzugsweise weniger als 130 kg/m³ . Die Porengrösse der Schäume liegt z.B. im Bereich von 100 bis 1000 µm.

Die Schweissnähte werden vorzugsweise durch geschmolzenen und nach dem Fügevorgang wieder erhärteten Kunststoff der Körpersegmente gebildet. Die Körpersegmente weisen hierbei insbesondere an den gefügten Seitenflächen flächige Schmelz- und Wiedererhärtungszonen auf.

Die Dicke der Schweissnähte bzw. der Schmelzzonen ist derart festgelegt, dass die netzartige Stegstruktur der Schweissnähte die Druckfestigkeit des Strukturelementes bezüglich Flächendrücke erhöht. Dies bedeutet, dass die Schweissnähte nicht nur Fügestellen zwischen zwei Körpersegmenten darstellen, sondern zugleich auch Verstelfungs- bzw. Verstärkungsstege zwischen zwei Körpersegmenten aus Schaumstoff sind. Ferner bewirken die Schweissnähte auch eine Versteifung des flächenförmigen Strukturelementes bezüglich Schub- und Biegebeanspruchung. Die Auslegung der Stärke bzw. Dicke der Schweissnähte erfolgt deshalb nicht nur hinsichtlich dem Kriterium einer stabilen Verbindungsnaht sondern auch hinsichtilch dem Kriterium einer wirksamen Versteifungs- bzw. Verstärkungsstruktur.

Die Dicke der Schmelz- und Wiedererhärtungszone der Seltenwandflächen, welche die Schweissnähte ausbilden ist daher derart gewählt, dass das flächenförmige Strukturelement Insbesondere eine hohe Druckfestigkeit bezüglich Flächendrücke aufweist.

Die Körpersegmente sind vorzugsweise lückenlos, d.h. ohne Lunkerbildung, aneinander gefügt und verschweisst. Die Körpersegmente weisen daher bevorzugt einen Formquerschnitt auf, welcher ein lückenloses Aneinanderfügen der Körpersegmente ermöglicht.

Die Körpersegmente weisen ein einer bevorzugten Ausführung der Erfindung In Draufsicht des flächenförmigen Strukturelementes eine polygonale Form, insbesondere eine acht-, sechs-, vier- oder dreieckige Form auf. Die Körpersegmente können In Draufsicht des Strukturelementes z.B. einen quadratischen, rechteckigen, hexagonalen oder dreieckigen Umriss, welcher die sogenannten Deckflächen der Körpersegmente umreisst, aufweisen.

Die Grösse der Körpersegmente kann je nach der zu erreichenden Steifigkeit bzw. Druckfestigkeit des Strukturelementes variieren.

Da jede der vorgenannten Geometrien sowie Grössen der Körpersegmente zu flächenförmigen Strukturelementen mit unterschiedlichen Eigenschaften führt, wird die Geometrie und Grösse der Körpersegmente primär aufgrund der spezifischen Anforderungen an das Strukturelement bestimmt.

Die Körpersegmente liegen besonders bevorzugt in Form von Würfel oder Quader vor. Körpersegmente in Quader- oder Würfelform können z.B. in mehreren Reihen und Kolonnen angeordnet sein, wobei die Schweissverbindungen eine Gitternetzstruktur mit sich kreuzenden Längs- und Querschweissnähten ausbilden. Die besagten Körpersegmente können auch in mehreren zueinander versetzten Reihen angeordnet sein, wobei die Schweissverbindungen durchgehende Querschweissnähte und zueinander versetzte Längsschweissnähte in der Art einer Ziegelsteinmauer ausbilden.

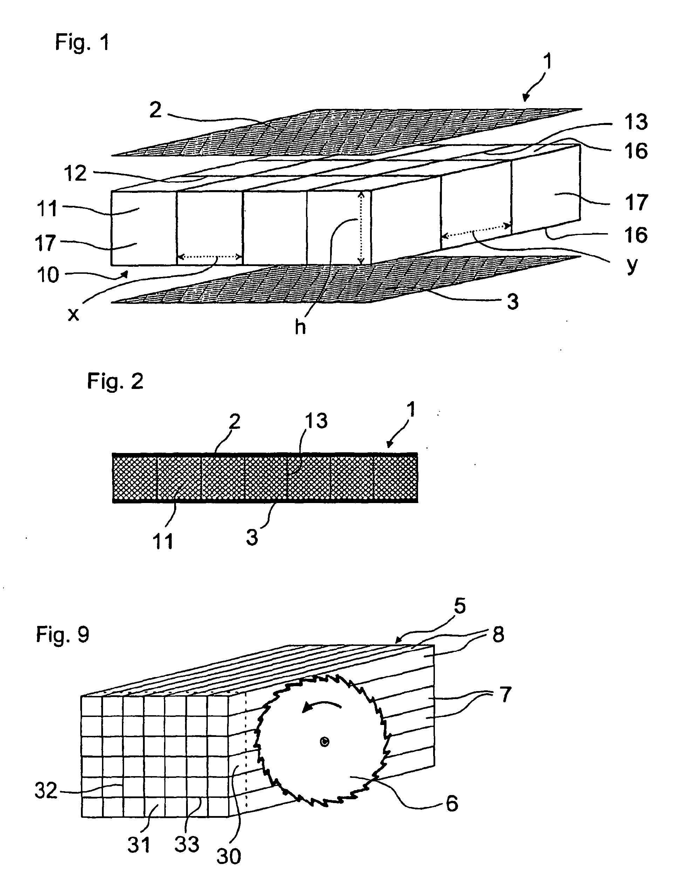

In Quaderform vorliegende Körpersegmente können z.B. (in Draufsicht des Strukturelementes) einen quadratischen oder rechteckigen Grundriss mit Seitenlängen (x, y) von 20 bis 600 mm, vorzugsweise von 30 bis 400 mm, insbesondere von 30 bis 300 mm, und und eine Höhe h von 30 bis 200 mm, insbesondere von 40 bis 100 mm aufweisen (siehe auch Fig. 1). Ein rechteckförmiges Körpersegment kann z.B. eine (in Draufsicht des Strukturelementes) Länge von 100 bis 250 mm und eine Breite von 30 bis 50 mm aufweisen.

Die Körpersegmente können in Draufsicht des flächenförmigen Strukturelementes ferner auch einen kurvenförmigen, z.B. einen konkaven oder konvexen, Umriss oder Umrissabschnitte aufweisen. Die Körpersegmente können ferner auch verbundsteinartig ausgebildet sein, d.h. die Körpersegmente sind derart geformt, dass sich die einzelnen Körpersegmente fest ineinanderfügen. Die Körpersegmente einer erfindungsgemässen Strukturelementes sind ferner bevorzugt zueinander kongruent.

Die Seitenflächen der Körpersegmente liegen überdies bei plattenförmigen Strukturelementen bevorzugt senkrecht zu den Deckflächen.

Die Erfindung betrifft im weiteren ein Verfahren zur Herstellung eines flächenförmigen Strukturelementes, enthaltend eine Mehrzahl von in einer Ebene nebeneinander angeordneten und miteinander verbundenen Körpersegmenten aus einem geschäumten Kunststoff.

Das Verfahren zeichnet sich durch folgende Schritte aus:
a. Herstellung von geschlossenzelligen stab- oder säulenförmigen Schaumstoffkörpern;
b. längsseitiges Zusammenschweissen der stab- oder säulenförmigen Schaumstoffkörper zu einem Schaumstoffblock unter Ausbildung flächiger Schweissnähte, wobei die flächigen Schweissnähte als porenarme oder porenfreie Kunststoffzwischenschichten vorliegen;
c. Aufteilung des Schaumstoffblockes in einzelne flächenförmige Strukturelemente, insbesondere Schaumstoffplatten, quer bzw. senkrecht zur Längsrichtung der stabförmigen Schaumstoffkörper,
wobei die flächigen Schweissnähte in Draufsicht des flächenförmigen Strukturelementes eine netzartige Stegstruktur ausbilden.

Die stab- oder säulenförmigen Schaumstoffkörper werden vorzugsweise mittels eines Extrusionsprozesses hergestellt. Die Schaumstoffkörper bzw. Körpersegmente weisen bevorzugt eine in Extrusionsrichtung verstreckte Orientierung des Materials auf. Dabei weisen insbesondere Polymerketten eine durch die Extrusion erfahrene Verstreckung in Extrusionsrichtung auf. Die Materialverstreckung bewirkt eine Verbesserung der mechanischen Eigenschaften, insbesondere der Druckfestigkeit, in Verstreckungsrichtung.

Die Schaumstoffkörper bzw. Körpersegmente weisen ferner bevorzugt eine in Extrusionsrichtung orientierte Zellenstruktur bzw. Zellenanordnung auf. Die orientierten Zellenstrukturen des Schaumstoffkörpers tragen hierbei zu einer Erhöhung der Druckfestigkeit des Strukturelementes bei.

In einer weiteren Ausführung der Erfindung können die stab- bzw. säulenförmigen Schaumstoffkörper aus einem vorgefertigten Schaumstoffblock gewonnen, d.h. geschnitten oder gesägt werden. Der genannte Schaumstoffblock wird dabei bevorzugt mittels eines Extrusionsverfahrens hergestellt.

Gemäss einer spezifischen Ausführungsvariante der Erfindung geschieht die Herstellung der Schaumstoffkörper mittels Extrusionsverfahren, wobei der Schaumstoffkörper aus einer Vielzahl von zusammengeführten, expandierten Polymer-Strängen besteht. Das Zusammenführen der Stränge geschieht unmittelbar nach Austritt aus der Extrusionsform durch das Expandieren der einzelnen Stränge. Hierbei kommt es zum Kontakt zwischen den jeweils benachbarten Strängen und zu einem Zusammenwachsen, bzw. Verkleben derselbigen unter Ausbildung eines Schaumstoffkörpers. Der Schaumstoffkörper liegt dabei in Form einer geschlossenen Packung von Strängen vor.

Die Stränge liegen bevorzugt im wesentlichen parallel zueinander und sind in Längs- bzw. Extrusionsrichtung des Schaumstoffkörpers angeordnet. Das Herstellungsverfahren kann so ausgelegt sein, dass die einzelnen Stränge im Schaumstoffkörper sichtbar bleiben oder zu einer einzigen Struktur zusammengeführt bzw. verschmolzen werden, in weicher die einzelnen Stränge nur noch andeutungsweise bzw. gar nicht mehr erkennbar sind. Die Stränge sind vorzugsweise derart dicht gepackt, dass die einzelnen Stränge einander ganzflächig berührend anliegen, ohne Zwischenräume auszubilden. Die Stränge können jedoch auch derart angeordnet bzw. gepackt sein, dass zwischen den einzelnen Strängen kanalartige Hohlräume ausgebildet werden.

Die Stränge werden zweckmässig durch ein Extrusionswerkzeug, welches bsp. als Formplatte vorliegt, erzeugt, wobei das Extrusionswerkzeug eine Vielzahl von benachbarten Öffnungen enthält, durch welche das Polymer strangförmig extrudiert wird. Die besagten Öffnungen können einen runden, wie kreis- oder ellipsenförmigen, oder polygonalen, wie rechteckigen, quadratischen oder hexagonalen, Querschnitt aufweisen. Die Öffnungen können auch in Form von Schlitzen ausgebildet sein. Die geschäumten Stränge können einen Durchmesser von bsp. 3 bis 50 mm, insbesondere von 4 bis 20 mm aufweisen.

Der Extrusionsform kann ferner ein weiteres, die Aussenkontur des herzustellenden Schaumstoffkörpers wiedergebendes Formwerkzeug nachgeschaltet sein, in welches die Packung von Strängen nach Austritt aus der Extrusionsform geführt wird, so dass der Schaumstoffkörper die Querschnittsform des Formwerkzeuges annimmt.

Mit dem oben beschriebenen Herstellungsverfahren können bsp. stab- bzw. säulenförmige Schaumstoffkörper hergestellt werden, welche bereits in der gewünschten Querschnittsform und -grösse extrudiert werden, so dass die Schaumstoffkörper einzeln oder bereits im Verbund mit weiteren stab- bzw. säulenförmigen Schaumstoffkörpern zu Körpersegmenten bzw. zu Körpersegmente enthaltenden, flächigen Strukturelementen abgelängt werden können.

Ferner können mit dem oben beschriebenen Herstellungsverfahren Schaumstoffkörper von einer Querschnittsgrösse produziert werden, welche grösser ist als der Querschnitt der benötigten stab- oder säulenförmigen Schaumstoffkörper, so dass in nachfolgenden Verarbeitungsschritten der extrudierte Schaumstoffkörper zu einzelnen stab- bzw. säulenförmigen Schaumstoffkörper zugeschnitten wird, wobei die Stränge im wesentlichen in Längsrichtung der zugeschnittenen stab- bzw. säulenförmigen Schaumstoffkörper verlaufen.

In bevorzugter Ausführung der gemäss obigem Verfahren hergestellten Schaumstoffkörper bzw. Körpersegmente, liegt die Ausrichtung der einzelnen Stränge der Körpersegmente im wesentlichen senkrecht zu den Deckflächen der aus Körpersegmenten gebildeten, flächigen Strukturelementen. Dabei ist die Druckfestigkeit, bedingt durch die Orientierung der Stränge, in Längsrichtung der Stränge, d.h. in Extrusionsrichtung, bevorzugt grösser als in die anderen Richtungen.

Die Schaumstoffkörper können mittels physikalischen oder chemischen Treibmitteln hergestellt werden. In bevorzugter Ausführung werden die Schaumstoffkörper, insbesondere durch ein Extrusionsverfahren hergestellte Schaumstoffkörper, mittels CO₂ physikalisch geschäumt. Die Zufuhr des Treibmittels kann hierbei direkt in die Extrusionsvorrichtung erfolgen.

In einer bevorzugten Ausführung der Erfindung werden die extrudierten Schaumstoffkörper längsseitig, d.h. entlang ihrer berührenden Längsseiten zu Kunststoffblöcken verschweisst. Aus diesen Kunststoffblöcken werden nachfolgend quer bzw. senkrecht zu den Längsseiten der Schaumstoffkörper flächenförmige, insbesondere plattenförmige, Strukturelemente geschnitten.

Das Schneiden der flächenförmigen Strukturelemente aus den Kunststoffblöcken kann mittels Sägen oder mittels eines thermischen Schneidprozesses geschehen.

In Abweichung zu den vorgenannten Verfahrensschritten können die Schaumstoffkörper auch bereits vorab in Körpersegmente zurecht geschnitten werden, wobei die einzelnen Körpersegmente nachfolgend zu flächenförmigen Strukturelementen zusammengeschweisst werden.

Die Schweissverbindung erfolgt vorzugsweise durch flächiges Anschmelzen der zu verbindenden Seitenflächen der Körpersegmente und nachfolgendes zusammenfügen derselben und Aushärten der Schmelzzonen.

In einer bevorzugten Ausführungsvariante sind Mittel zur Steuerung des Anmschmelzvorganges während des Schweissens vorgesehen, welche die Herstellung von Schweissnähten von einer bestimmten Dicke bzw. Dickenbereich erlauben, wobei der Dickenbereich derart gewählt wird, dass die netzartige Stegstruktur der Schweissnähte eine versteifende Wirkung auf die Kunststoffplatte ausübt.

Der Schweissvorgang ist zweckmässig ein thermoplastisches Schweissen. Die Herstellung der Schweissverbindung kann mittels Strahlungsschweissen oder Kontaktschweissen geschehen. Anwendbare Kunststoffschweissverfahren sind z.B. Heizelementschweissen oder Infrarot-Schweissen. Der Schweissvorgang kann ohne oder mit Zusatzstoffen erfolgen.

Die erfindungsgemässen flächenförmigen Strukturelemente weisen gegenüber herkömmlichen geschäumten Kunststoffplatten eine höhere Steifigkeit und insbesondere eine höhere Druckfestigkeit auf. Diese Eigenschaften werden im wesentlichen durch die Schweissnähte zwischen den einzelnen Körpersegmenten begründet. Die Schweissnähte bilden ein Netzwerk von stegartigen Verbindungen in der Art eines Gerüstes, wobei die Schweissnähte in Form von porenarmen bzw. porenfreien, dichten Kunststoffzwischenschichten vorliegen.

Das Gerüst der stegartigen Verbindungen der Schweissnähte erhöht die Druckfestigkeit, da die Stege der Kunststoffzwischenschicht wesentlich weniger kompressibel sind als die Schaumstoffkörper selber. Wird beispielsweise auf das erfindungsgemässe Strukturelement ein Flächendruck ausgeübt (z.B. bei einem Sandwich-Verbund ein Flächendruck über die Deckschichten auf das Strukturelement in Funktion als Kernschicht), so wirken die Druckkräfte primär auf die steife Stegstruktur und nicht auf den Schaumstoffkörper selbst.

Die Erhöhung der Steifigkeit erfindungsgemässer Strukturelemente resultiert ebenfalls aus der gerüstartig aufgebauten Struktur der Schweissnähte, welche zu einer erhöhten Verwindungs-und Biegesteifigkeit des Strukturelementes führen.

Das erfindungsgemässe Strukturelement findet bevorzugt Verwendung in Verbundelementen, insbesondere Verbundplatten, mit wenigstens einer auf einer Seite des Strukturelementes angeordneten Deckschicht.

Besonders bevorzugt findet die erfindungsgemässe Strukturelemente Verwendung als Kernschicht in Sandwich-Verbundelementen, insbesondere Sandwich-Verbundplatten, mit beidseitig der Kernschicht angeordneten Deckschichten. Die Sandwich-Verbundelemente können z.B. aus einem erfindungsgemässen flächenförmigen Strukturelement mit je einer beidseitig des Strukturelementes angeordneten Deckschicht bestehen. Ferner können auf einer oder beiden Seiten des Strukturelementes auch mehrere Schichten angeordnet sein. Wird das erfindungsgemässe Strukturelement als Kernschicht in einer Sandwich-Verbundplatte verwendet, so ist das Strukturelement zweckmässig ein Plattenelement.

Die besagten Schichten bzw. Deckschichten können beispielsweise mittels einer Klebverbindung gegenseitig und/oder mit der Kernschicht verbunden sein.

Die Deckschichten können z.B. starre oder biegsame Platten aus Kunststoff oder faserverstärktem Kunststoff, wie glasfaserverstärktem Kunststoff, sein. Ferner können die Deckschichten auch Platten bzw. Bleche aus Metall, insbesondere aus Aluminium oder einer Aluminiumlegierung sein. Die Deckschichten sind im Vergleich zur Kernschicht vorzugsweise verhältnismässig dünne Platten.

Sandwich-Verbundelemente mit erfindungsgemässen Strukturelementen als Kernschicht weisen trotz ihres geringen Gewichtes eine hohe Steifigkeit und eine ausgezeichnete Schub- und Druckfestigkeit auf. Solche Sandwich-Strukturen eignen sich deshalb insbesondere für Anwendungen, welche leichte jedoch strukturell hoch belastbare Komponenten erfordern.

Sandwich-Verbundelemente mit erfindungsgemässen Strukturelementen als Kernschicht können z.B. als Konstruktionselemente im Bauwesen eingesetzt werden. Beispiele für solche Konstruktionselemente sind Wände, Böden, Decken, Türen, Zwischenwände, Trennwände oder Verkleidungselemente.

Sandwich-Verbundelemente mit erfindungsgemässen Strukturelementen als Kernschicht finden ferner bevorzugt Einsatz im Transportwesen zu Land (z.B. Strassen- oder Schienenfahrzeugbau), zu Wasser (z.B. Schiff- oder Bootsbau, Wassersportgerätebau) oder in der Luft (z.B. Flugzeugbau). Dies können z.B. Sandwich-Verbundelemente gemäss Erfindung für Kofferaufbauten, Ladebrücken, Wände, Decken, Türen, Deckel, Verkleidungen oder Teile davon, auf oder an Lastkraftwagen oder Eisenbahnwagen zum Gütertransport oder Wände, Decken, Böden, Zwischenwände, Verkleidungselemente, Türen, Deckel oder Teile davon, an Fahrzeugen zum Personentransport, wie Omnibussen, Strassenbahnen, Eisenbahnwagen oder auf Schiffen, wie Passagierschiffen, Fähren, Ausflugsdampfern oder -booten sein.

Die erfindungsgemässen Sandwich-Verbundelemente können auch in Sportartikeln für den Einsatz zu Land, im Wasser oder in der Luft Verwendung finden.

Besonders bevorzugt finden die Sandwich-Verbundelemente mit erfindungsgemässen Strukturelementen als Kernschicht Einsatz als Windflügel bzw. Rotorblätter für Windkraftanlagen.

Im folgenden wird die Erfindung beispielhaft und mit Bezug auf die beiliegenden Zeichnungen näher erläutert. Es zeigen:
- Fig. 1:: eine Explosionsdarstellung eines Sandwich-Verbundes mit einem erfindungsgemässen Strukturelement als Kernschicht;
- Fig. 2:: einen Querschnitt durch einen Sandwich-Verbund mit einem erfindungsgemässen Strukturelement als Kernschicht;
- Fig. 3:: Draufsicht eines erfindungsgemässen Strukturelementes einer ersten Ausführungsart;
- Fig.4:: Draufsicht eines erfindungsgemässen Strukturelementes einer zweiten Ausführungsart;
- Fig. 5:: Draufsicht eines erfindungsgemässen Strukturelementes einer dritten Ausführungsart;
- Fig. 6:: Draufsicht eines erfindungsgemässen Strukturelementes einer vierten Ausführungsart;
- Fig. 7:: Draufsicht eines erfindungsgemässen Strukturelementes einer fünften Ausführungsart;
- Fig. 8:: Draufsicht eines erfindungsgemässen Strukturelementes einer sechsten Ausführungsart;
- Fig. 9:: Perspektivische Darstellung eines Kunststoffblockes zur Herstellung von erfindungsgemässen Strukturelementen gemäss Fig. 5.

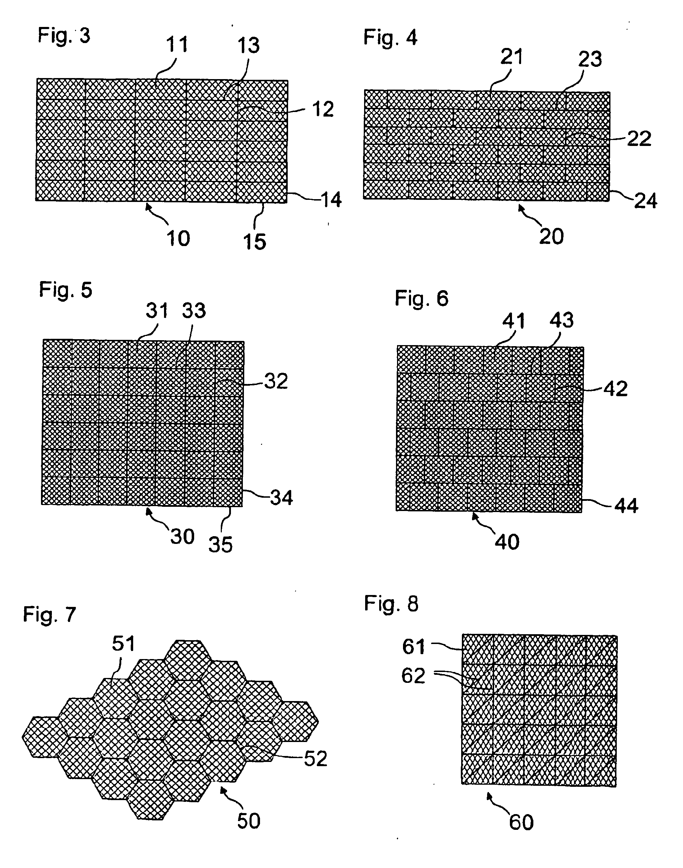

Fig. 1 zeigt ein Sandwich-Verbundelement 1 mit einer Kernschicht aus einem erfindungsgemässen Strukturelement, welches als Kunststoffplatte 10 ausgebildet ist (vgl. auch Fig. 3). Die Kunststoffplatte 10 besteht aus quaderförmigen Körpersegmenten 11, welche über Längs- 12 und Querschweissnähte 13 ausbildende, flächigen Schweissverbindungen an ihren berührenden Seitenflächen 17 miteinander verbunden sind. Die Schweissnähte 12, 13 bilden hierbei (in Platten-Draufsicht) eine netzartige, steife Stegstruktur aus. Beidseits der Kernschicht, auf den Deckflächen 16 der Körpersegmente 11, ist jeweils eine Deckschicht 2, 3 angeordnet. Die Deckschichten 2, 3 können aus Kunststoffplatten, faserverstärkten Kunststoffplatten (z.B. Glasfaserverstärkte Duro- oder Thermoplaste) oder Metallblechen, insbesondere Aluminiumblechen, bestehen.

Fig. 2 zeigt ein Sandwich-Verbundelement 1 gemäss Fig. 1 in Querschnittsansicht. Die Deckschichten 2, 3 sind mittels Klebverbindung mit der Kernschicht verbunden.

Fig. 3 bis 7 zeigen verschiedene Ausführungsformen von erfindungsgemässen Strukturelementen in Form von Kunststoffplatten 10, 20, 30, 40, 50, 60 aus nebeneinander liegend angeordneten Körpersegmenten 11, 21, 31, 41, 51, 61 verschiedener Geometrien und Anordnung.

Die Kunststoffplatten 10, 20 gemäss Fig. 3 und 4 enthalten Körpersegmente 11, 21 mit in Plattendraufsicht rechteckigem Querschnitt. Die Körpersegmente 11 gemäss Fig. 3 sind in mehreren Reihen 14 und Kolonnen 15 nebeneinander in einer Ebene angeordnet, wobei die Schweissverbindungen zwischen den Körpersegmenten 11 eine Gitternetzstruktur aus sich kreuzenden Längs- 12 und Querschweissnähten 13 ausbilden.

Die Körpersegmente 21 gemäss Fig. 4 sind in mehreren zueinander versetzten Reihen 24 nebeneinander und in einer Ebene angeordnet, wobei die Schweissverbindungen eine ziegelsteinmauerartige Struktur mit durchgehenden Querschweissnähten 23 und zueinander versetzten Längsschweissnähten 22 ausbilden.

Die Kunststoffplatten 30, 40 gemäss Fig. 5 und 6 enthalten Körpersegmente 31, 41 mit in Plattendraufsicht quadratischem Querschnitt. Die Körpersegmente 31 gemäss Fig. 5 sind in mehreren Reihen 34 und Kolonnen 35 nebeneinander und in einer Ebene angeordnet, wobei die Schweissverbindungen eine Gitternetzstruktur mit sich kreuzenden Längs- 32 und Querschweissnähten 33 ausbilden.

Die Körpersegmente 41 gemäss Fig. 6 sind in mehreren zueinander versetzten Reihen 44 nebeneinander und in einer Ebene angeordnet, wobei die Schweissverbindungen durchgehende Querschweissnähte 43 und zueinander versetzte Längsschweissnähte 42 ausbilden.

Fig. 7 zeigt eine weitere Ausführung einer erfindungsgemässen Kunststoffplatte 50 mit in Plattendraufsicht hexagonalen, d.h. wabenförmigen, Körpersegmenten 51, welche nebeneinander und in einer Ebene angeordnet und unter Ausbildung von Schweissnähten 52 gegenseitig verschweisst sind.

Fig. 8 zeigt eine weitere Ausführung einer erfindungsgemässen Kunststoffplatte 60 mit in Plattendraufsicht dreieckigen Körpersegmenten 61, welche nebeneinander und in einer Ebene angeordnet und unter Ausbildung von Schweissnähten 62 gegenseitig verschweisst sind.

Fig. 9 zeigt einen aus säulen- bzw. stabförmigen Schaumstoffkörpern 7 gebildeten Kunststoffblock 5, wobei die Schaumstoffkörper 7 z.B. mittels Extrusion oder durch Aufteilung eines homogenen Schaumstoffblockes hergestellt sind. Die einzelnen Schaumstoffkörper 7 sind erfindungsgemäss mittels Kunststoffschweissen unter Ausbildung von Längs- 32 und Querschweissnähten 33 entlang ihrer Längsseiten 8 miteinander verbunden. Durch Zersägen 6 oder thermisches Schneiden wird der Kunststoffblock 5 in einzelne erfindungsgemässe Kunststoffplatten 30 gemäss Fig. 5 zu einzelnen Kunststoffplatten 30 aufgeteilt, wobei sich die Kunststoffplatten 30 aus in einer Ebene nebeneinander angeordneten Körpersegmenten 31 zusammensetzen.

## Patentansprüche

1. Flächenförmiges Strukturelement (10) geeignet für Kernschichten von Sandwich-Verbundelementen enthaltend eine Mehrzahl von in einer Ebene nebeneinander angeordneten und miteinander verbundenen Körpersegmenten (11) aus einem geschäumten, thermoplastischen Kunststoff,
**dadurch gekennzeichnet, dass**
das Strukturelement (10) vollständig aus Kunststoff ist und die Körpersegmente (11) an ihren anstoßenden Seitenflächen unter Ausbildung von flächigen, in Draufsicht das flächenförmigen Strukturelements (10) sich Kreuzenden Schweißnähte (12, 13) gegenseitig verschweißt sind, wobei die flächigen Schweißnähte (12, 13) eine porenarme oder porenfreie Kunststoffzwischenschicht aus aufgeschmolzenem Kunststoff der Körpersegmente in Form einer in Draufsicht des flächenförmigen Strukturelements (10) netzartigen, versteifend wirkenden Stegstruktur ausbilden, und dass das flächenförmige Strukturelement (10) aus einem Polyethylenterephthalat (PET) besteht.

2. Flächenförmiges Strukturelement (10) geignet für Kernschichten von Sandwich-Verbundelementen enthaltend eine Mehrzahl von in einer Ebene nebeneinander angeordneten und miteinander verbundenen Körpersegmenten (11) aus einem geschäumten, thermoplastischen Kunststoff,
**dadurch gekennzeichnet, dass**
das Strukturelement (10) vollständig aus Kunststoff ist und die Körpersegmente (11) an ihren anstoßenden Seitenflächen unter Ausbildung von flächigen, in Draufsicht das flächenförmigen Strukturelements (10) sich Kreuzenden Schweißnähte (12, 13) gegenseitig verschweißt sind, wobei die flächigen Schweißnähte (12, 13) eine porenarme oder porenfreie Kunststoffzwischenschicht aus aufgeschmolzenem Kunststoff der Körpersegmente in Form einer in
Draufsicht des flächenförmigen Strukturelements (10) netzartigen, versteifend wirkenden Stegstruktur ausbilden, und dass das flächenförmige Strukturelement (10) aus einem Styrol/Acrylnitril-Copolymer (SAN) besteht.

3. Flächenförmiges Strukturelement nach Anspruch 1, wobei die Körpersegmente aus einem geschlossenzelligen Schaumstoff bestehen.

4. Flächenförmiges Strukturelement nach einem der Ansprüche 1 bis 3, wobei die Körpersegmente (11) Zuschnitte aus stab- oder säulenförmigen Schaumstoffkörpern (7) sind.

5. Flächenförmiges Strukturelement nach Anspruch 4, wobei die stab- oder säulenförmigen Schaumstoffkörper (7) mittels Extrusion hergestellt sind, und die Extrusionsrichtung in den aus den Schaumstoffkörpern (7) hergestellten Körpersegmenten (11) parallel oder im wesentlichen parallel zur Schnittlinie zweier sich kreuzenden Schweißnahtflächen (12, 13) liegt.

6. Flächenförmiges Strukturelement nach Anspruch 5, wobei die Körpersegmente (11) eine in Extrusionsrichtung orientierte Verstreckung der Polymerstruktur aufweisen.

7. Flächenförmiges Strukturelement nach einem der Ansprüche 1 bis 6, wobei die Körpersegmente (11) lückenlos aneinandergefügt sind, und die Körpersegmente (11) einen Formquerschnitt aufweisen, welcher ein lückenloses Aneinanderfügen der Körpersegmente ermöglicht.

8. Flächenförmiges Strukturelement nach einem der Ansprüche 1 bis 7, wobei die Körpersegmente (11) in Draufsicht des flächenförmigen Strukturelementes (10) eine polygonale Form und vorzugsweise eine acht-, sechs-, vier- oder dreieckige Form aufweisen.

9. Flächenförmiges Strukturelement nach einem der Ansprüche 1 bis 7, wobei das flächenförmige Strukturelement (10) eine Kunststoffplatte ist.

10. Verfahren zur Herstellung eines flächenförmigen Strukturelementes (10), enthaltend eine Mehrzahl von in einer Ebene nebeneinander angeordneten und miteinander verbundenen Körpersegmenten (11) aus einem geschäumten, thermoplastischen Kunststoff nach Anspruch 1, **gekennzeichnet durch** folgende Schritte:
a. Herstellung von geschlossenzelligen stab- oder säulenförmigen Schaumstoffkörpern (7);
b. längsseitiges Zusammenschweißen der stab- oder säulenförmigen Schaumstoffkörper (7) zu einem Schaumstoffblock (5) **durch** flächiges Anschmelzen der zu verbindenden Seitenflächen der Körpersegmente und nachfolgendes Zusammenfügen derselbigen und Aushärten der Schmelzzonen unter Ausbildung flächiger Schweißnähte (32, 33) in Form von porenarmen oder porenfreien Kunststoffzwischenschichten;
c. Aufteilung des Schaumstoffblockes (5) in einzelne flächenförmige Strukturelemente (30), insbesondere Schaumstoffplatten, quer zur Längsrichtung der stabförmigen Schaumstoffkörper (7),
wobei die flächigen Schweißnähte (32, 33) in Draufsicht des flächenförmigen Strukturelementes (30) sich kreuzen oder sich in einem Winkel treffen und eine netzartige Stegstruktur ausbilden, und wobei das Strukturelement (30) aus PET hergestellt wird.

11. Verfahren zur Herstellung eines flächenförmigen Strukturelementes (10), enthaltend eine Mehrzahl von in einer Ebene nebeneinander angeordneten und miteinander verbundenen Körpersegmenten (11) aus einem geschäumten, thermoplastischen Kunststoff nach Anspruch 2, **gekennzeichnet durch** folgende Schritte:
a. Herstellung von geschlossenzelligen stab- oder säulenförmigen Schaumstoffkörpern (7);
b. längsseitiges Zusammenschweißen der stab- oder säulenförmigen Schaumstoffkörpern (7) zu einem Schaumstoffblock (5) **durch** flächiges Anschmelzen der zu verbindenden Seitenflächen der Körpersegmente und nachfolgendes Zusammenfügen derselbigen und Aushärten der Schmelzzonen unter Ausbildung flächiger Schweißnähte (32, 33) in Form von porenarmen oder porenfreien Kunststoffzwischenschichten;
c. Aufteilung des Schaumstoffblockes (5) in einzelne flächenförmige Strukturelemente (30), insbesondere Schaumstoffplatten, quer zur Längsrichtung der stabförmigen Schaumstoffkörper (7),
wobei die flächigen Schweißnähte (32, 33) in Draufsicht des flächenförmigen Strukturelementes (30) sich kreuzen oder sich in einem Winkel treffen und eine netzartige Stegstruktur ausbilden, und wobei das Strukturelement (30) aus SAN hergestellt wird.

12. Verfahren nach Anspruch 10 oder 11, wobei die stab- oder säulenförmigen Schaumstoffkörper (7) mittels eines Extrusionsprozesses hergestellt werden.

13. Verfahren nach Anspruch 12, wobei die stab- oder säulenförmigen Schaumstoffkörper (7) mit einer in Extrusionsrichtung verstreckten Polymerkettenstruktur hergestellt werden.

14. Verfahren nach Anspruch 10 oder 11, wobei Mittel zur Steuerung des Anschmelzvorganges während des Schweißens vorgesehen sind, welche die Herstellung von Schweißnähten (12, 13) eines bestimmten Dickenbereichs erlauben, und wobei der Dickenbereich derart gewählt wird, dass die netzartige Stegstruktur der Schweißnähte (12, 13) die Druckfestigkeit des Strukturelementes (10) bezüglich Flächendrücke erhöht.

15. Verwendung des flächenförmigen Strukturelementes (10) nach einem der Ansprüche 1 bis 9 in einem Strukturbauteil (1) mit einer wenigstens auf einer Oberfläche des flächenförmigen Strukturelementes (10) aufgebrachten Deckschicht (2).

16. Verwendung des flächenförmigen Strukturelementes (10) nach Anspruch 15 als Kernschicht in einem Strukturbauteil (1), wobei das Strukturbauteil (1) ein Sandwich-Verbundelement, insbesondere eine Sandwich-Verbundplatte, mit beidseitig der Kernschicht angeordneten Deckschichten (2, 3) ist.

17. Verwendung des Sandwich-Verbundelementes (1) nach Anspruch 16 zur Herstellung von Windflügeln in Windkraftanlagen.

## Claims

1. Planar structural element (10) suitable for core layers of sandwich composite elements, containing a plurality of body segments (11) connected to one another and arranged next to one another in a plane, made of a foamed thermoplastic plastics material, **characterised in that** the structural element (10) is completely made of plastics material and the body segments (11) are welded to one another at their abutting side faces with the formation of flat weld seams (12, 13) intersecting in the plan view of the planar structural element (10), the flat weld seams (12, 13) forming a low-pore or pore-free intermediate plastics material layer made of molten plastics material of the body segments in the form of a web structure acting in a reinforcing manner and being net-like in the plan view of the planar structural element (10), and **in that** the planar structural element (10) consists of a polyethylene terephthalate (PET).

2. Planar structural element (10) suitable for core layers of sandwich composite elements, containing a plurality of body segments (11) connected to one another and arranged next to one another in a plane, made of a foamed thermoplastic plastics material, **characterised in that** the structural element (10) is completely made of plastics material and the body segments (11) are welded to one another at their abutting side faces with the formation of flat weld seams (12, 13) intersecting in the plan view of the planar structural element (10), the flat weld seams (12, 13) forming a low-pore or pore-free intermediate plastics material layer made of molten plastics material of the body segments in the form of a web structure acting in a reinforcing manner and being net-like in the plan view of the planar structural element (10), and **in that** the planar structural element (10) consists of a styrene/acrylonitrile copolymer (SAN).

3. Planar structural element according to claim 1, wherein the body segments consist of a closed-cell foam.

4. Planar structural element according to any one of claims 1 to 3, wherein the body segments (11) are pre-cut parts made of rod-shaped or pillar-shaped foam bodies (7).

5. Planar structural element according to claim 4, wherein the rod-shaped or pillar-shaped foam bodies (7) are produced by means of extrusion, and the extrusion direction in the body segments (11) which are produced from the foam bodies (7) is parallel or substantially parallel to the intersection line of two intersecting weld seam faces (12, 13).

6. Planar structural element according to claim 5, wherein the body segments (11) have a drawing of the polymer structure oriented in the extrusion direction.

7. Planar structural element according to any one of claims 1 to 6, wherein the body segments (11) are joined together without gaps, and the body segments (11) have a cross section of a shape which allows the body segments to be joined together without gaps.

8. Planar structural element according to any one of claims 1 to 7, wherein the body segments (11), in the plan view of the planar structural element (10), have a polygonal shape and preferably an octagonal, hexagonal, quadrangular or triangular shape.

9. Planar structural element according to any one of claims 1 to 7, wherein the planar structural element (10) is a plastics material panel.

10. Method for producing a planar structural element (10), containing a plurality of body segments (11) connected to one another and arranged next to one another in a plane, made of a foamed, thermoplastic plastics material according to claim 1, **characterised by** the following steps:
a. producing closed-cell rod-shaped or pillar-shaped foam bodies (7);
b. welding together the rod-shaped or pillar-shaped foam bodies (7) on the long side to form a foam block (5) by superficial melting of the side faces of the body segments to be connected and subsequent joining thereof and hardening of the melt zones with the formation of flat weld seams (32, 33) in the form of low-pore or pore-free intermediate plastics material layers;
c. dividing the foam block (5) into individual planar structural elements (30), in particular foam panels, transverse to the longitudinal direction of the rod-shaped foam bodies (7),
wherein the flat weld seams (32, 33) intersect in the plan view of the planar structural element (30) or meet at an angle and form a net-like web structure, and wherein the structural element (30) is produced from PET.

11. Method for producing a planar structural element (10), containing a plurality of body segments (11) connected to one another and arranged next to one another in a plane, made of a foamed, thermoplastic plastics material according to claim 2, **characterised by** the following steps:
a. producing closed-cell rod-shaped or pillar-shaped foam bodies (7);
b. welding together the rod-shaped or pillar-shaped foam bodies (7) on the long side to form a foam block (5) by superficial melting of the side faces of the body segments to be connected and subsequent joining thereof and hardening of the melt zones with the formation of flat weld seams (32, 33) in the form of low-pore or pore-free intermediate plastics material layers;
c. dividing the foam block (5) into individual planar structural elements (30), in particular foam panels, transverse to the longitudinal direction of the rod-shaped foam bodies (7),
wherein the flat weld seams (32, 33) intersect in the plan view of the planar structural element (30) or meet at an angle and form a net-like web structure, and wherein the structural element (30) is produced from SAN.

12. Method according to claim 10 or 11, wherein the rod-shaped or pillar-shaped foam bodies (7) are produced by means of an extrusion process.

13. Method according to claim 12, wherein the rod-shaped or pillar-shaped foam bodies (7) are produced with a polymer chain structure drawn in the extrusion direction.

14. Method according to claim 10 or 11, wherein means to control the melting process during welding are provided, which allow the production of weld seams (12, 13) of a certain thickness range, and wherein the thickness range is selected in such a way that the net-like web structure of the weld seams (12, 13) increases the compressive strength of the structural element (10) with respect to surface pressures.

15. Use of the planar structural element (10) according to any one of claims 1 to 9 in a structural component (1) with a cover layer (2) applied at least on one surface of the planar structural element (10).

16. Use of the planar structural element (10) according to claim 15 as a core layer in a structural component (1), wherein the structural component (1) is a sandwich composite element, in particular a sandwich composite panel, with cover layers (2, 3) arranged on both sides of the core layer.

17. Use of the sandwich composite element (1) according to claim 16 for producing vanes in wind power stations.

## Revendications

1. Elément de structure (10) de forme plane, adapté à la réalisation de couches centrales formant l'âme d'éléments composites en sandwich, et renfermant une pluralité de segments de corps (11) en une matière plastique thermoplastique sous forme de mousse, qui sont agencés côte à côte dans un plan et reliés les uns aux autres,
**caractérisé**
**en ce que** l'élément de structure (10) est en totalité en matière plastique et les segments de corps (11) sont soudés réciproquement les uns aux autres sur leur côtés latéraux adjacents en formant des joints soudés (12, 13) plans, qui se croisent en vue de dessus de l'élément de structure (10) de forme plane, les joints soudés plans (12, 13) formant une couche intermédiaire de matière plastique faiblement poreuse ou exempte de pores constituée de matière plastique fusionnée des segments de corps, qui se présente, en vue de dessus de l'élément de structure (10) de forme plane, sous la forme d'une structure de nervures en treillis ayant une action de rigidification, et en ce que l'élément de structure (10) de forme plane est réalisé en un polyéthylène-téréphtalate (PET).

2. Elément de structure (10) de forme plane, adapté à la réalisation de couches centrales formant l'âme d'éléments composites en sandwich, et renfermant une pluralité de segments de corps (11) en une matière plastique thermoplastique sous forme de mousse, qui sont agencés côte à côte dans un plan et reliés les uns aux autres,
**caractérisé**
**en ce que** l'élément de structure (10) est en totalité en matière plastique et les segments de corps (11) sont soudés réciproquement les uns aux autres sur leur côtés latéraux adjacents en formant des joints soudés (12, 13) plans, qui se croisent en vue de dessus de l'élément de structure (10) de forme plane, les joints soudés plans (12, 13) formant une couche intermédiaire de matière plastique faiblement poreuse ou exempte de pores constituée de matière plastique fusionnée des segments de corps, qui se présente, en vue de dessus de l'élément de structure (10) de forme plane, sous la forme d'une structure de nervures en treillis ayant une action de rigidification, et en ce que l'élément de structure (10) de forme plane est réalisé en un copolymère de styrène/acrylonitrile (SAN).

3. Elément de structure de forme plane selon la revendication 1, dans lequel les segments de corps sont constitués par une mousse à cellules ou pores fermés.

4. Elément de structure de forme plane selon l'une des revendications 1 à 3, dans lequel les segments de corps (11) sont des pièces recoupées dans des corps de mousse (7) en forme de barre ou de forme colonnaire.

5. Elément de structure de forme plane selon la revendication 4, dans lequel les corps de mousse (7) en forme de barre ou de forme colonnaire sont fabriqués par extrusion, et la direction d'extrusion dans les segments de corps (11) fabriqués à partir des corps de mousse (7), est parallèle ou sensiblement parallèle à la ligne d'intersection des surfaces de joints soudés (12, 13) qui se croisent.

6. Elément de structure de forme plane selon la revendication 5, dans lequel les segments de corps (11) présentent un étirement de la structure de polymère, orienté dans la direction d'extrusion.

7. Elément de structure de forme plane selon l'une des revendications 1 à 6, dans lequel les segments de corps (11) sont disposés côte à côte de manière jointive, sans intervalles intermédiaires, et les segments de corps (11) présentent une forme de section transversale permettant une disposition côte à côte jointive, sans intervalles intermédiaires.

8. Elément de structure de forme plane selon l'une des revendications 1 à 7, dans lequel les segments de corps (11) présentent, en vue de dessus de l'élément de structure (10) de forme plane, une forme polygonale et de préférence une forme à huit, six, quatre ou trois côtés.

9. Elément de structure de forme plane selon l'une des revendications 1 à 7, dans lequel l'élément de structure (10) de forme plane est une plaque en matière plastique.

10. Procédé de fabrication d'un élément de structure (10) de forme plane renfermant une pluralité de segments de corps (11) en une matière plastique thermoplastique sous forme de mousse, qui sont agencés côte à côte dans un plan et reliés les uns aux autres, selon la revendication 1, **caractérisé par** les étapes suivantes :
a. fabrication de corps de mousse (7) à cellules ou pores fermés en forme de barre ou de forme colonnaire ;
b. assemblage par soudage le long des côtés longitudinaux des corps de mousse (7) en forme de barre ou de forme colonnaire pour former un bloc de mousse (5), par fusion superficielle des faces latérales à relier des segments de corps, puis assemblage de ceux-ci et solidification ou durcissement des zones de fusion en formant des joints soudés plans (32, 33) sous forme de couches intermédiaires de matière plastique faiblement poreuse ou exempte de pores ;
c. subdivision du bloc de mousse (5) en des éléments de structure individuels (30) de forme plane, notamment des plaques de mousse, transversalement à la direction longitudinale des corps de mousse (7) en forme de barre,
les joints soudés plans (32, 33), en vue de dessus de l'élément de structure (30) de forme plane, se croisant ou se rencontrant sous un certain angle et formant une structure de nervures en forme de treillis, et l'élément de structure (30) étant fabriqué en PET.

11. Procédé de fabrication d'un élément de structure (10) de forme plane renfermant une pluralité de segments de corps (11) en une matière plastique thermoplastique sous forme de mousse, qui sont agencés côte à côte dans un plan et reliés les uns aux autres, selon la revendication 2, **caractérisé par** les étapes suivantes :
a. fabrication de corps de mousse (7) à cellules ou pores fermés en forme de barre ou de forme colonnaire ;
b. assemblage par soudage le long des côtés longitudinaux des corps de mousse (7) en forme de barre ou de forme colonnaire pour former un bloc de mousse (5), par fusion superficielle des faces latérales à relier des segments de corps, puis assemblage de ceux-ci et solidification ou durcissement des zones de fusion en formant des joints soudés plans (32, 33) sous forme de couches intermédiaires de matière plastique faiblement poreuse ou exempte de pores ;
c. subdivision du bloc de mousse (5) en des éléments de structures individuels (30) de forme plane, notamment des plaques de mousse, transversalement à la direction longitudinale des corps de mousse (7) en forme de barre,
les joints soudés plans (32, 33), en vue de dessus de l'élément de structure (30) de forme plane, se croisant ou se rencontrant sous un certain angle et formant une structure de nervures en forme de treillis, et l'élément de structure (30) étant fabriqué en SAN.

12. Procédé selon la revendication 10 ou la revendication 11, d'après lequel les corps de mousse (7) en forme de barre ou de forme colonnaire sont fabriqués selon un processus d'extrusion.

13. Procédé selon la revendication 12, d'après lequel les corps de mousse (7) en forme de barre ou de forme colonnaire sont fabriqués avec une structure de chaine de polymère étirée dans la direction d'extrusion.

14. Procédé selon la revendication 10 ou la revendication 11, d'après lequel sont prévus des moyens de commande de l'opération de fusion pendant le soudage, qui permettent la réalisation de joints soudés (12, 13) d'une plage d'épaisseur déterminée, et d'après lequel la plage d'épaisseur est choisie de façon à ce que la structure de nervures en treillis des joints soudés (12, 13) augmente la résistance à la compression de l'élément de structure (10) relativement à des pressions superficielles.

15. Utilisation de l'élément de structure (10) de forme plane selon l'une des revendications 1 à 9, dans une pièce de structure (1) comprenant une couche de recouvrement (2) appliquée sur au moins une face de l'élément de structure (10) de forme plane.

16. Utilisation de l'élément de structure (10) de forme plane, selon la revendication 15, en tant que couche centrale formant l'âme d'une pièce de structure (1), la pièce de structure (1) étant un élément composite en sandwich, notamment une plaque composite en sandwich, présentant des couches de recouvrement (2, 3) disposées de part et d'autre de la couche centrale formant l'âme.

17. Utilisation de l'élément composite en sandwich (1) selon la revendication 16, pour la fabrication de pales dans des éoliennes.
